# EUROPEAN PATENT SPECIFICATION

(11) **EP 2 683 216 B1**
(45) Date of publication and mention of the grant of the patent: **22.04.2020**
(21) Application number: 12752026.0
(22) Date of filing: 16.02.2012
(51) Int. Cl.: H05B 6/12, H05B 6/36

(54) **COOKING DEVICE**
KOCHVORRICHTUNG
DISPOSITIF DE CUISSON

(30) Priority: 28.02.2011 JP 2011042634
(43) Date of publication of application: 08.01.2014
(73) Proprietor: Mitsubishi Electric Corporation, Tokyo 100-8310 (JP); Mitsubishi Electric Home Appliance Co., Ltd., Fukaya-shi, Saitama 369-1295 (JP)
(72) Inventor: TANAKA, Michio, Fukaya-shi Saitama 369-1295 (JP)
(74) Representative: Pfenning, Meinig & Partner mbB
(86) International application number: PCT/JP2012/001009
(87) International publication number: WO 2012/117680

(56) References cited:
- EP-A2- 0 706 303
- WO-A1-2010/101135
- JP-A- 8 264 275
- JP-A- 408 264 275
- JP-A- 2000 082 579
- JP-A- 2003 080 522
- JP-A- 2005 085 560
- JP-A- 2005 085 560
- JP-B2- 3 163 520
- JP-B2- 3 163 520

## Description

### Technical Field

The present invention relates to a heating cooker that performs induction heating of a pan serving as a cooking container, with a heating coil.

### Background Art

There is a conventional heating cooker in which a heating coil having a ring shape and disposed under a top plate is placed in a concave portion of a U-shaped coil base (ferrite) extending from the inner circumference to the outer circumference of the heating coil (see Patent Literature 1, for example).

EP 0 706 303 A2 describes an improved coil for induction heating, to be installed in cooking appliances, the coil being under the ceramic glass over which the recipient is placed, and so formed because the coil is composed of a metal band inserted in a insulator ceramic support for its fixing, in such a way that the ceramic support incorporates soft irons, preferably four, orthogonally located two by two, having foreseen that the ceramic support is fitted to a metallic support which shields the magnetic field and fixes the core to the appliance, having a great number of fixing points for its adaptation to several models, and one of its special features is that over the coil there are placed an electric insulator and a capacitive shielding sheet.

### Citation List

### Patent Literature

Patent Literature 1: Japanese Unexamined Patent Application Publication No. 2003-100429 (Fig. 1)

### Summary of Invention

### Technical Problem

Another heating cooker exists that includes a plurality of heating coils that are arranged circumferentially around a ring-shaped heating coil. Each of the heating has a deformed-ring-shape elongated in the circumferential direction. A problem with the deformed-ring-shaped heating coil is that the shape of the heating coil will change due to a residual stress towards the outside of the heating coil, caused by forming the deformed coil shape.

The present invention is made to overcome the problem described above and an object thereof is to provide a heating cooker that, even if with a deformed-ring-shaped heating coil, does not cause the shape of the heating coil to change due to residual stress, and that facilitates assembling the heating coil to the coil base. Solution to Problem

A heating apparatus according to the present invention includes a main body constituting an outer wall; a top plate, on which a cooking container is placed, and which is provided on a top side of the main body; a coil base disposed below the top plate; and a deformed-ring-shaped heating coil arranged on the coil base, in which a peripheral wall surface of the heating coil is formed to be perpendicular to an arrangement surface of the coil base. Advantageous Effects of Invention

According to the invention, the heating coil that is arranged on the coil base has a deformed-ring-shape, and in which the peripheral wall surface is perpendicular to the arrangement surface of the coil base. Accordingly, when the heating coil is assembled onto the coil base, the perpendicular surface of the heating coil serves to position itself against the coil base, and thus facilitating the work.

### Brief Description of Drawings

[Fig. 1] Fig. 1 is a perspective view of a heating cooker according to an embodiment.
[Fig. 2] Fig. 2 is a perspective view of the heating cooker according to the embodiment in which a top plate is removed.
[Fig. 3] Fig. 3 is an enlarged top view of a coil unit on the left side of the heating cooker of Fig. 2.
[Fig. 4] Fig. 4 is a bottom view of the coil unit illustrated in Fig. 3.
[Fig. 5] Fig. 5 is an enlarged cross-sectional view, seen from the side, of a ferrite portion in the bottom view of Fig. 4.
[Fig. 6] Fig. 6 shows enlarged plan views of a heating coil that is formed on the coil unit of Fig. 3 and that has a deformed-ring-shape extending in the circumferential direction.
[Fig. 7] Fig. 7 is an enlarged cross-sectional view, seen from the side, of a portion of the deformed-ring-shaped heating coil.

### Description of Exemplary Embodiment

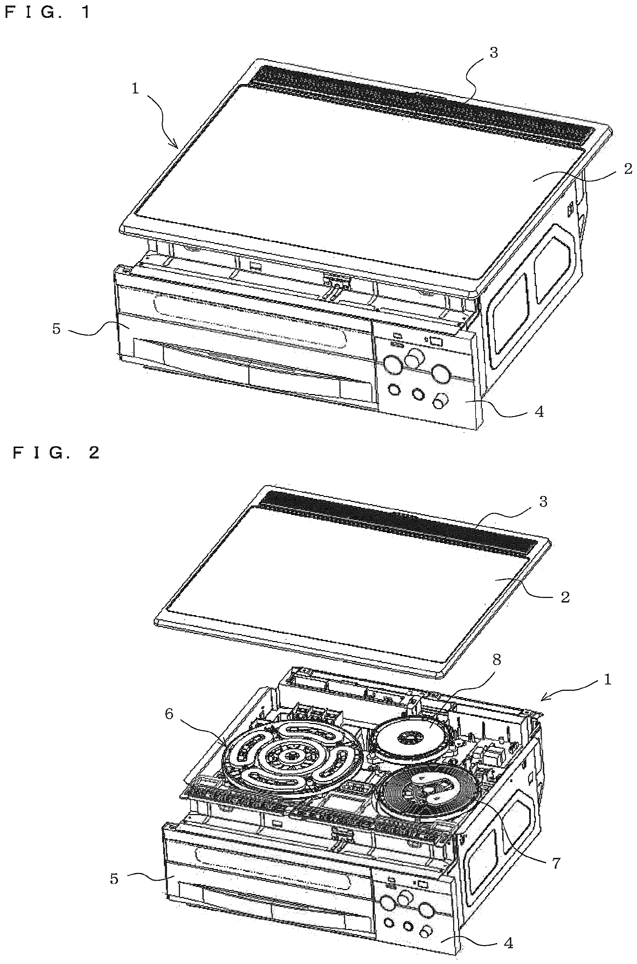

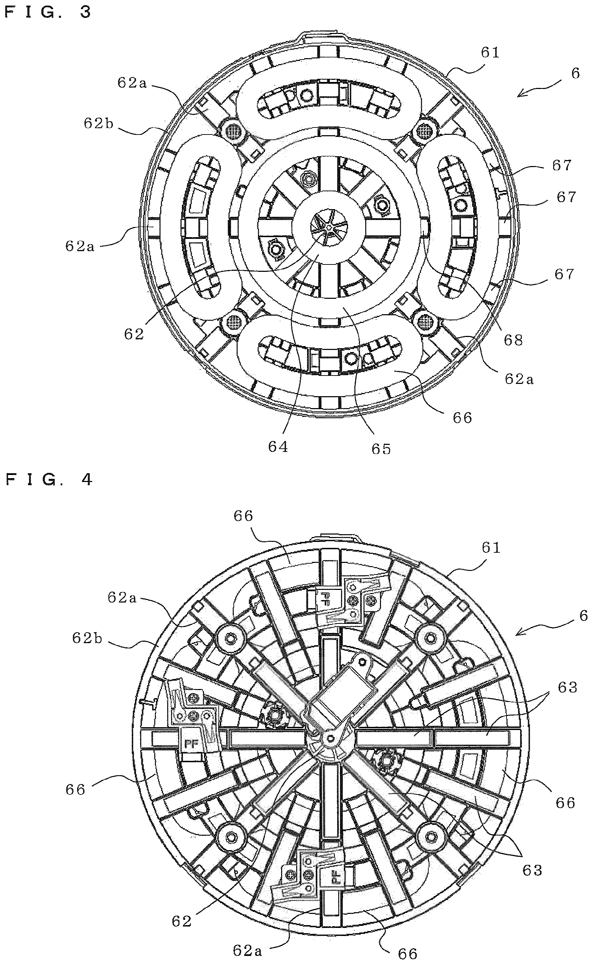

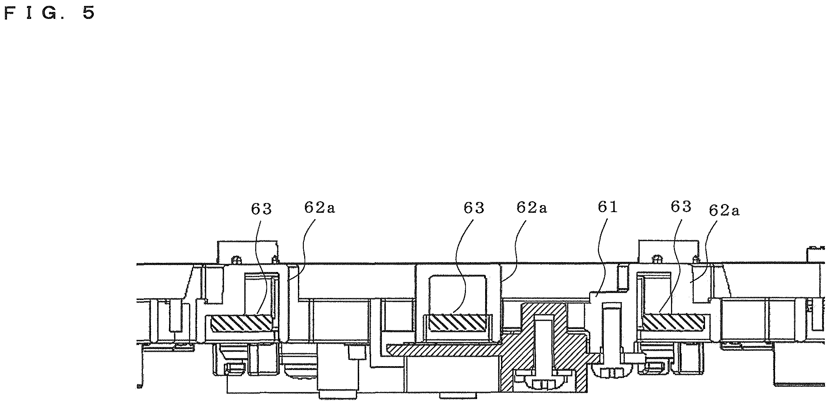

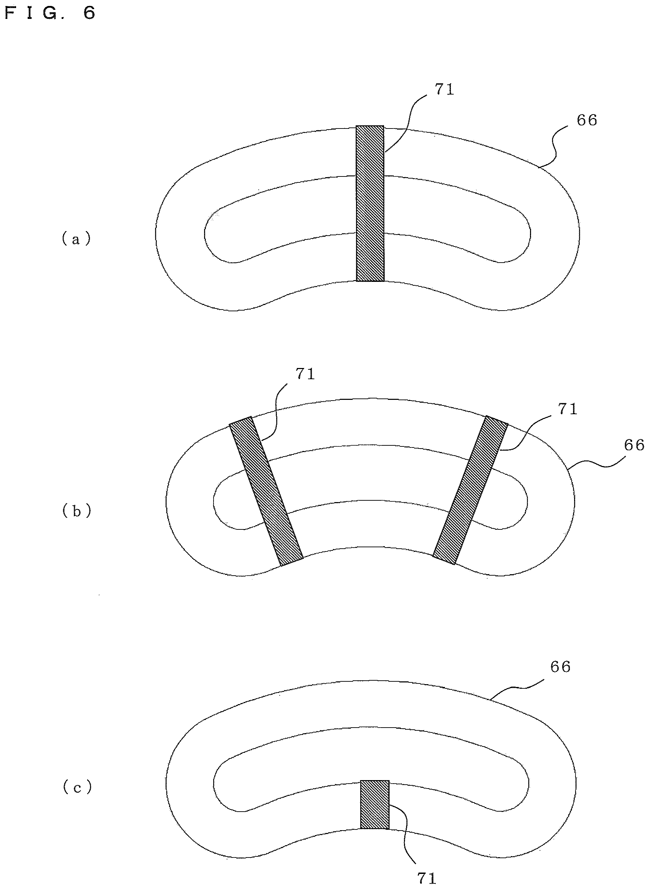

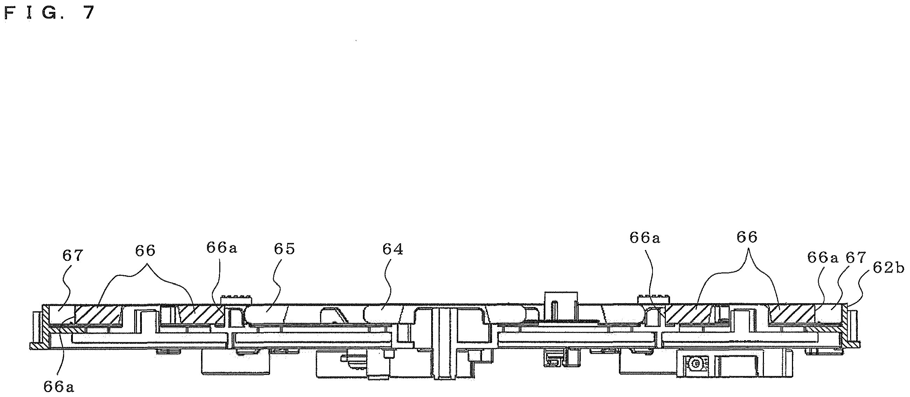

Fig. 1 is a perspective view of a heating cooker according to an embodiment. Fig. 2 is a perspective view of the heating cooker according to the embodiment in which a top plate is removed. Fig. 3 is an enlarged top view of a coil unit on the left side of the heating cooker of Fig. 2. Fig. 4 is a bottom view of the coil unit illustrated in Fig. 3. Fig. 5 is an enlarged cross-sectional view of a ferrite portion in the bottom view of Fig. 4 seen from the side. Fig. 6 illustrates enlarged plan views of a heating coil that is formed on the coil unit of Fig. 3 in a deformed-ring-shape extending in the circumferential direction. Fig. 7 is an enlarged cross-sectional view, seen from the side, of a portion of the deformed-ring-shaped heating coil.

Referring to theses diagrams, the heating cooker of the present embodiment includes a cooking-apparatus main body 1 that constitutes an outer wall; a top plate 2 that is mounted so as to cover the top opening surface of the cooking-apparatus main body 1 and that has an outer frame in its outer circumference; a cover 3 of an intake/exhaust port, in which the cover 3 is detachably provided to the outer frame in the rear portion of the top plate 2; an operating unit 4 arranged on the front face of the cooking-apparatus main body 1, and a grill door 5 provided on the front face of the cooking-apparatus main body 1 and adjacent to the operating unit 4. The top plate 2 is constituted by a heat-resistant tempered glass, for example. For example, two coil units 6 and 7 and a single heater unit 8 are arranged under the top plate 2.

As will be described later, the coil unit 6 is provided with a plurality of heating coils. The coil unit 7 is provided with a ring-shaped heating coil of a small diameter and a ring-shaped heating coil of a large diameter. Further, the heater unit 8 is provided with a radiant heater. When a high-frequency current flows in a heating coil described above, magnetic flux is generated from the heating coil in accordance with the high-frequency current, and a pan or the like that is a cooking container placed on the top plate 2 is induction-heated by the magnetic flux. In place of the heater unit 8, a coil unit may be used that has an outer diameter smaller than that of the coil unit 7.

As illustrated in Figs. 3 and 4, the coil unit 6 described above includes a coil base 61, a plurality of ferrite pieces 63, and a plurality of heating coils 64, 65, and 66. The coil base 61 has a disk shape and has a center support 62 positioned at the center, a plurality of beams 62a that extend radially with this center support 62 at its center, and a ring-shaped side plate 62b that is connected to each end of the beams 62a. Furthermore, as illustrated in Fig. 5, each of the beams 62a has a U-shape whose cross-sectional shape opens downwards, and the ferrite pieces 63 are fitted in and fixed to the openings. In addition, the heating coils 64, 65, and 66 described later are provided in the top side surface of the coil base 61, that is, the opposite side to the ferrite pieces 63 side of the beams 62a.

The ferrite pieces 63 each serves as a magnetic path of the magnetic flux that has leaked downwards and laterally of the magnetic flux that is generated from the heating coils 64, 65, and 66. With this function, it is possible to prevent the magnetic flux from leaking from the coil unit 6, and thus prevent leaking such that no adverse effect is caused to electronic components on the circuit board provided in the operating unit 4 and to electronic components on the circuit board configured to supply high-frequency currents to the heating coils 64, 65, and 66.

The heating coil 64 of the coil unit 6 has a ring shape and is arranged so as to surround the outer circumference of the center support 62 with the center support 62 at its center. The heating coil 65 has a ring shape that has a larger diameter than the outer diameter of the heating coil 64 and is arranged so as to surround the outer circumference of the heating coil 64. Each of the heating coils 66 has a deformed-ring-shape that extends in the circumferential direction of the coil base 61. Four heating coils 66, for example, are arranged with equal spacing around the heating coil 65 in the circumferential direction.

A deformed-ring-shaped heating coil 66 is fabricated by the following processes.

First, a coil that is to constitute the heating coil 66 is made by winding a wire rod. Then, this coil to be the heating coil 66 is press-worked to form the deformed-ring-shaped heating coil 66 described above. At this point, the peripheral wall surface of the heating coil 66 is press-worked into a planar shape. In the present embodiment, in particular, the press work is performed such that the peripheral wall surface of the coil is a surface (hereinafter, referred to as a "perpendicular surface 66a") that is perpendicular against each coil mounting surface of the coil base 61.

Note that each heating coil 66 is mounted from a direction perpendicular to the corresponding coil mounting surface of the coil base 61. That is, the mounting direction of each heating coil 66 is parallel to the perpendicular surface 66a.

The above-described planar surface (perpendicular surface 66a) does not refer to a perfect planar surface. Any configuration can be employed as long as the plane connecting the outer surface of the wire rod, in which the outer surface constitutes the peripheral wall surface of the heating coil 66, is a substantially planar surface.

In a stage after this press work, stress remains (residual stress) in the coil that has been formed into a deformed-ring-shape. With the residual stress, the coil tends to restore its undeformed original shape before the press work.

The stress by which the coil tends to restore its original shape before the press work is removed by applying heat treatment to the above-described post-press-work coil. As such, the deformed-ring-shaped heating coil 66 is configured. By applying the heat treatment, recrystallization of the source material of the heating coil 66 is promoted and the residual stress is mitigated; hence, prevention of change in shape is made possible under a temperature range in actual use. Grain growth due to the recrystallization can be seen in the material of the heating coil 66 after the heat treatment.

In the course of fabricating the heating coil 66, as described above, heat treatment is carried out in order to remove the residual stress of the coil; however, if the coil is excessively heated, then there is a risk of degradation of the insulation performance and resulting in the heating coil 66 with a short life. Hence, the heat treatment is performed so as not to totally remove the residual stress. In other words, the heating coil 66 is in a state in which residual stress remains slightly therein.

Accordingly, the slightly remaining residual stress is addressed by mounting shape retaining means to the heating coil 66, as described in the following.

Here, a description is given of the shape retaining means.

Regarding the heating coils 66 described above that are configured by press work and heat treatment as above, as illustrated in Fig. 5, the side(s) of each heating coil 66 is bundled and retained by a tape 71 that is shape retaining means. This configuration prevents the widening while restoring its original shape caused by the residual stress remaining in the heating coil 66, as well as retaining the perpendicular surface 66a that has been formed on the peripheral wall surface of this heating coil 66 (see Fig. 6).

As the retaining method, there exist the following methods: a method, as illustrated in (a) of the same figure, such as winding the tape 71 around a middle portion in a direction orthogonal to the longitudinal axis of the heating coil 66 in order to bundle the sides of the heating coil 66 facing each other; a method, as illustrated in (b) of the same figure, such as winding the tape 71 around each of the two ends and in the direction orthogonal to the longitudinal axis of the heating coil 66 in order to bundle the sides of the heating coil 66 facing each other; and, further, a method as illustrated in (c) of the same figure, such as winding the tape 71 around the coil on the inner side in the orthogonal direction of the heating coil 66.

With the winding method of the tape 71 illustrated in (a) of the same figure, it is possible to prevent the widening, which is caused by the residual stress of the heating coil 66, at a single winding position.

With the winding method of the tapes 71 illustrated in (b) of the same figure, since the heating coil 66 can be retained near each of the bends of the coil where force caused by the residual stress to restore the original shape of the coil is strong, it is possible to retain the shape of the heating coil 66 more rigidly.

Furthermore, with the winding method of the tape 71 illustrated in (c) of the same figure, it is possible to prevent the bundling of the coil from becoming frayed, which is caused by the force of the heating coil 66 that tends to restore its original shape.

The tape 71 suppresses the change in shape of the perpendicular surface 66a of the peripheral wall surface, which is caused by the residual stress occurring in the heating coil 66. Furthermore, as an example of the above-described tape 71, for example, a glass cloth tape that is strong against heat and deformation is used.

Each of the deformed-ring-shaped heating coils 66 around which the tape(s) 71 is wound is fitted into a mounting area formed by, for example, three positioning convex portions 67 provided along the side plate 62b of the coil base 61 and with a single positioning convex portion 68 that is provided between the positioning convex portions 67 and the center support 62 and that is arranged to face the positioning convex portion 67 that is positioned in the middle position of the positions of the three positioning convex portions 67.

Note that the side of each of the positioning convex portions 67 and 68 to which the heating coil 66 is mounted is configured to be a planar surface that is perpendicular to each coil installing surface of the coil base 61.

Accordingly, when the heating coil 66 is fitted into the mounting area formed by the positioning convex portions 67 and 68, it is possible to properly and easily fit the heating coil 66 to the coil base 61 by fitting together the planar surfaces of the perpendicular surface 66a of the heating coil 66 and the perpendicular surface of each of the positioning convex portions 67 and 68.

Furthermore, even if the heating coil 66 is mounted on the coil base 61 in a state in which residual stress remains therein, since, as described above, the plurality of positioning convex portions 67 and 68, whose portions that are in contact with the heating coil 66 are planar surfaces, are provided in contact with the perpendicular surface 66a and in the mounting area, change in shape of the heating coil 66 can be prevented even after the heating coil is mounted on the coil base 61.

That is, by providing the heating coil 66 to the mounting area of the coil base 61 formed by the positioning convex portions 67 and 68 described above, the change in shape of the perpendicular surface 66a of the peripheral wall surface, which is caused by the residual stress occurring in the heating coil 66, is further suppressed. Note that the positioning convex portions 67 and 68 described above are provided on the ferrite pieces 63, which secure the deformed-ring-shaped heating coil 66.

As above, according to the present embodiment, since the tape(s) 71 is wound around each deformed-ring-shaped heating coil 66 to retain the perpendicular surface 66a that is formed on the peripheral wall surface of the heating coil 66, and, since this perpendicular surface 66a and the mounting direction of the heating coil 66 to the coil base 61 are parallel (in the same direction) to each other, it is possible to easily fit the heating coil 66 into the mounting area formed by the positioning convex portions 67 and 68 and thus assembling is facilitated.

Additionally, since the heating coil 66 to which the tape(s) 71 is wound around is fitted into the mounting area formed by the positioning convex portions 67 and 68, the perpendicular surface 66a that is formed on the peripheral wall surface of the heating coil 66 does not change in shape.

Furthermore, since there is no need of excessive heat treatment, deterioration of insulation performance of the deformed-ring-shaped heating coil 66 can be suppressed.

### Reference Signs List

1 heating cooker main body; 2 top plate; 3 cover; 4 operating unit; 5 grill door; 6 coil unit; 61 coil base; 62 center support; 62a beam; 62b side plate of the coil base; 63 ferrite piece; 64, 65, 66 heating coil; 66a perpendicular surface of the heating coil; 67, 68 positioning convex portion; 7 coil unit; 8 heater unit; 71 tape.

## Claims

1. Method for assembling a heating cooker, comprising:
a main body (1) constituting an outer wall;
a top plate (2), on which a cooking container is placed, and which is provided on a top side of the main body (1);
a coil base (61) disposed below the top plate (2); and
a deformed-ring-shaped heating coil (66) arranged on the coil base (61), wherein
the deformed-ring-shaped heating coil (66) is formed from a ring-shaped heating coil by putting pressure on a part of a peripheral wall surface of the ring-shaped heating coil,
**characterized in that**
a peripheral wall surface (66a) of the heating coil (66), which has a residual stress to restore its undeformed original shape, is formed to be perpendicular to an arrangement surface of the coil base (61).

2. The method for assembling a heating cooker of claim 1, wherein heat treatment is applied to the heating coil (66) in a process of fabrication.

3. The method for assembling a heating cooker of claim 2, wherein grain growth is seen in the heating coil (66).

4. A heating cooker, comprising:
a main body (1) constituting an outer wall;
a top plate (2), on which a cooking container is placed, and
which is provided on a top side of the main body (1);
a coil base (61) disposed below the top plate (2); and
a deformed-ring-shaped heating coil (66) arranged on the coil base (61), wherein
the deformed-ring-shaped heating coil (66) is formed from a ring-shaped heating coil by putting pressure on a part of a peripheral wall surface of the ring-shaped heating coil,
**characterized in that**
a peripheral wall surface (66a) of the heating coil (66), which has a residual stress to restore its undeformed original shape, is formed to be perpendicular to an arrangement surface of the coil base (61).

5. The heating cooker of claim 4, wherein the heating coil (66) includes a strip-shaped shape retaining means (71) that is wound around in a direction orthogonal to a longitudinal axis of the heating coil (66).

6. The heating cooker of claim 5, wherein the shape retaining means (71) is a glass cloth tape.

7. The heating cooker of any one of claims 4 to 6, wherein a shape of the heating coil (66) is retained in a mounting area formed by positioning convex portions (67) in the coil base (61).

## Patentansprüche

1. Verfahren zum Montieren eines Heizkochgeräts, umfassend:
einen Hauptkörper (1), der eine Außenwand bildet;
eine obere Platte (2), auf der ein Kochbehälter platziert wird und die auf einer oberen Seite des Hauptkörpers (1) vorgesehen ist;
eine Spulenbasis (61), die unter der oberen Platte (2) angeordnet ist; und
eine verformt-ringförmige Heizspule (66), die auf der Spulenbasis (61) angeordnet ist, wobei
die verformt-ringförmige Heizspule (66) aus einer ringförmigen Heizspule geformt wird, durch ausüben von Druck auf einen Teil einer Außenwandoberfläche der ringförmigen Heizspule,
**dadurch gekennzeichnet, dass**
eine Außenwandoberfläche (66a) der Heizspule (66), die eine Eigenspannung aufweist, um ihre unverformte ursprüngliche Form wiederherzustellen, senkrecht zu einer Anordnungsoberfläche der Spulenbasis (61) ausgebildet ist.

2. Verfahren zum Montieren eines Heizkochgeräts nach Anspruch 1, wobei die Heizspule (66) in einem Herstellungsprozess einer Wärmebehandlung unterzogen wird.

3. Verfahren zum Montieren eines Heizkochgeräts nach Anspruch 2, wobei in der Heizspule (66) Kornwachstum zu sehen ist.

4. Heizkochgerät, umfassend:
einen Hauptkörper (1), der eine Außenwand bildet;
eine obere Platte (2), auf der ein Kochbehälter platziert wird, und die auf einer oberen Seite des Hauptkörpers (1) vorgesehen ist;
eine Spulenbasis (61), die unter der oberen Platte (2) angeordnet ist; und
eine verformt-ringförmige Heizspule (66), die auf der Spulenbasis (61) angeordnet ist, wobei
die verformt-ringförmige Heizspule (66) aus einer ringförmigen Heizspule geformt wird, durch ausüben von Druck auf einen Teil einer Außenwandoberfläche der ringförmigen Heizspule,
**dadurch gekennzeichnet, dass**
eine Außenwandoberfläche (66a) der Heizspule (66), die eine Eigenspannung aufweist, um ihre unverformte ursprüngliche Form wiederherzustellen, senkrecht zu einer Anordnungsoberfläche der Spulenbasis (61) ausgebildet ist.

5. Heizkochgerät nach Anspruch 4, wobei die Heizspule (66) ein streifenförmiges Formhaltemittel (71) umfasst, das in einer Richtung senkrecht zu einer Längsachse der Heizspule (66) um diese gewickelt ist.

6. Heizkochgerät nach Anspruch 5, wobei das Formhaltemittel (71) ein Glasfaserklebeband ist.

7. Heizkochgerät nach einem der Ansprüche 4 bis 6, wobei eine Form einer Heizspule (66) in einem Befestigungsbereich beibehalten wird, der durch Positionieren konvexer Abschnitte (67) in der Spulenbasis (61) gebildet wird.

## Revendications

1. Procédé destiné à assembler un dispositif de cuisson, comprenant :
un corps principal (1) qui constitue une paroi extérieure ;
une plaque supérieure (2), sur laquelle est placé un contenant de cuisson, et qui est disposée sur un côté supérieur du corps principal (1) ;
une base de serpentin (61) disposée sous la plaque supérieure (2) ; et
un serpentin de chauffage en forme d'anneau déformé (66) agencé sur la base de serpentin (61), où
le serpentin de chauffage en forme d'anneau déformé (66) est formé à partir d'un serpentin de chauffage en forme d'anneau, en exerçant une pression sur une partie d'une surface de la paroi périphérique du serpentin de chauffage en forme d'anneau,
**caractérisé en ce que**
une surface de la paroi périphérique (66a) du serpentin de chauffage (66), qui présente une contrainte résiduelle pour restaurer sa forme initiale non déformée, est formée de façon à être perpendiculaire à une surface d'agencement de la base de bobine (61).

2. Procédé destiné à assembler un dispositif de cuisson selon la revendication 1, où un traitement thermique est appliqué au serpentin de chauffage (66) dans le processus de fabrication.

3. Procédé destiné à assembler un dispositif de cuisson selon la revendication 2, où il est possible de voir la croissance des grains dans le serpentin de chauffage (66).

4. Dispositif de cuisson, comprenant :
un corps principal (1) qui constitue une paroi extérieure ;
une plaque supérieure (2), sur laquelle est placé un contenant de cuisson, et qui est disposée sur un côté supérieur du corps principal (1) ;
une base de serpentin (61) disposée sous la plaque supérieure (2) ; et
un serpentin de chauffage en forme d'anneau déformé (66) agencé sur la base de serpentin (61), où
le serpentin de chauffage en forme d'anneau déformé (66) est formé à partir d'un serpentin de chauffage en forme d'anneau, en exerçant une pression sur une partie d'une surface de la paroi périphérique du serpentin de chauffage en forme d'anneau,
**caractérisé en ce que**
une surface de la paroi périphérique (66a) du serpentin de chauffage (66), qui présente une contrainte résiduelle pour restaurer sa forme initiale non déformée, est formée de façon à être perpendiculaire à une surface d'agencement de la base de bobine (61).

5. Dispositif de cuisson selon la revendication 4, où le serpentin de chauffage (66) comprend des moyens de retenue en forme de bande (71) qui sont enroulés dans une direction orthogonale à l'axe longitudinal du serpentin de chauffage (66).

6. Dispositif de cuisson selon la revendication 5, où les moyens de retenue en forme de bande (71) sont constitués par une bande de tissu de verre.

7. Dispositif de cuisson selon l'une quelconque des revendications 4 à 6, où une forme du serpentin de chauffage (66) est retenue dans une zone de montage formée en positionnant des parties convexes (67) dans la base de serpentin (61).
